# EUROPÄISCHE PATENTSCHRIFT

(11) **EP 2 724 524 B1**
(45) Veröffentlichungstag und Bekanntmachung des Hinweises auf die Patenterteilung: **12.12.2018**
(21) Anmeldenummer: 12723631.3
(22) Anmeldetag: 09.05.2012
(51) Int. Cl.: H04N 1/107

(54) **COMPUTERMAUS UND VERFAHREN ZUM LESEN VON DATEN AUS EINEM DOKUMENT**
COMPUTER MOUSE AND METHOD FOR READING DATA FROM A DOCUMENT
SOURIS D'ORDINATEUR ET PROCÉDÉ POUR LIRE DES DONNÉES SUR UN DOCUMENT

(30) Priorität: 27.06.2011 DE 102011078121
(43) Veröffentlichungstag der Anmeldung: 30.04.2014
(73) Patentinhaber: Bundesdruckerei GmbH, 10969 Berlin (DE)
(72) Erfinder: HERRMANN, Klaus, 30625 Hannover (DE); SCHUBERT, Michael, 30419 Hannover (DE); WOLF, Andreas, 07743 Jena (DE)
(74) Vertreter: Richardt Patentanwälte PartG mbB
(86) Internationale Anmeldenummer: PCT/EP2012/058485
(87) Internationale Veröffentlichungsnummer: WO 2013/000614

(56) Entgegenhaltungen:
- WO-A2-2004/090800
- WO-A2-2006/010019
- WO-A2-2006/124496
- DE-A1- 19 858 935
- DE-A1-102006 030 406

## Beschreibung

Die Erfindung betrifft eine Computermaus, ein elektronisches System sowie ein Verfahren zum Lesen von Daten aus einem Dokument.

Bei einer Computermaus handelt es sich um ein Manipulandum, welches dazu dient, um von einem Benutzer über eine Unterlage bewegt zu werden. Durch die Computermaus wird diese Bewegung sensiert und durch ein Computersystem, an welches die Computermaus angeschlossen ist, zum Beispiel in die Bewegung eines Cursors einer graphischen Nutzeroberfläche des Computersystems umgesetzt. Aus DE 198 58 935 A1, DE 102 60 924 B3, DE 10 2004 023 845 A1 und EP 2 254 325 A1 sind verschiedene Ausführungsformen solcher Computermäuse bekannt.

Weiterhin offenbart die Druckschrift WO 2006/124496 A1 ein optisches Handlesegerät als eine Speichervorrichtung zum Aufnehmen von Bildern und Texten aus einem Schriftstück. Das Handlesegerät umfasst einen Datenspeicher, einen Scanner, eine Recheneinrichtung, die konfiguriert ist, um Text aus Dokumenten zu extrahieren, einen Energiespeicher und einen Universal-Serial-Bus-Port. Optional umfasst das Handlesegerät ein Smartcard- oder RFID-Lesegerät.

Der Erfindung liegt demgegenüber die Aufgabe zugrunde, eine verbesserte Computermaus zu schaffen, sowie ein elektronisches System und ein Verfahren zum Lesen von Daten aus einem Dokument.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Der Begriff "Computermaus" schließt erfindungsgemäß jedes von einem Benutzer betätigbare Manipulandum ein, welches zur Sensierung einer Position oder einer Bewegung der Computermaus auf einer Unterlage ausgebildet ist. Der Positions- oder Bewegungssensor der Computermaus kann dabei mechanisch oder optisch ausgebildet sein; im letzteren Fall spricht man von einer "optischen Maus". Die Computermaus kann drahtgebunden oder drahtlos mit dem Computersystem kommunizieren und von dem Computersystem mit elektrischer Energie versorgt werden oder eine eigene Energieversorgung, insbesondere eine Batterie, aufweisen. Im Sinne der vorliegenden Erfindung wird unter einer Computermaus auch ein computermausförmiges Gerät verstanden, welches zum Beispiel einen sogenannten Trackball aufweist, um den Cursor zu steuern; in diesem Fall erfolgt die Steuerung des Cursors also nicht durch Bewegung der Computermaus, sondern durch Bewegung eines Teils der Computermaus, beispielsweise also durch Drehung des Trackballs. In die Computermaus ist zudem eine RF-Schnittstelle vorhanden, deren Antenne ein oder mehrere Antennenwicklungen aufweist. Die Öffnung der dadurch gebildeten Antennenspule ist auf die Unterseite der Computermaus ausgerichtet; beispielsweise liegen die Antennenwicklungen auf oder in der Unterseite des Gehäuses der Computermaus zur Realisierung eines hohen Kopplungsfaktors mit einem an der Unterseite der Computermaus anliegenden Dokument.

Unter einem "Dokument" wird hier jedes Dokument verstanden, welches einen Chip, d.h. eine integrierte elektronische Schaltung, beinhaltet, wobei das Dokument zum Beispiel Kunststoff- und/oder Papier-basiert sein kann. Bei dem Dokument kann es sich um ein Wert- oder Sicherheitsdokument, wie zum Beispiel um ein ID-Dokument, d.h. ein Ausweisdokument, wie zum Beispiel einen Personalausweis, Reisepass, Führerschein, Fahrzeugbrief, Fahrzeugschein oder Firmenausweis, oder ein Zahlungsmittel, wie zum Beispiel eine Banknote, eine Kreditkarte oder einen sonstigen Berechtigungsnachweis, wie zum Beispie! eine Eintrittskarte, einen Frachtbrief, ein Visum oder dergleichen, handeln. Insbesondere kann es sich beim Dokument um eine Chipkarte handeln. Unter einem Dokument wird hier auch ein Dokument verstanden, welches buchartig ausgebildet ist, wie dies zum Beispiel bei einem Reisepass der Fall ist.

Der Chip des Dokuments ist als RFID-Chip ausgebildet. Unter einem "RFID-Chip" wird hier jeder Chip verstanden, welcher zur Ausführung eines RFID oder Near Field Communication (NFC)-Übertragungsverfahren ausgebildet ist, insbesondere nach dem Standard ISO14443.

Beispielsweise hat das Dokument einen Dokumentenkörper mit einer integrierten Antenne, wie zum Beispiel ein oder mehrere Antennenwicklungen, die am Rand des Dokumentenkörpers verlaufen, wobei die Antenne an den RFID-Chip angeschlossen ist. Beispielsweise kann es sich bei einem solchen Dokument um einen elektronischen Reisepass oder einen elektronischen Personalausweis handeln.

Das Dokument hat zumindest einen Teilbereich, der eine Information trägt, die zum optischen Einscannen vorgesehen ist; bei diesem Teilbereich kann es sich um die sogenannte Machine Readable Zone (MRZ) und/oder die Card Access Number (CAN) eines maschinenlesbaren Reisedokuments (Machine Readable Travel Document - MRTD) handeln. Die Information kann mit einer speziellen Druckfarbe auf den Teilbereich aufgedruckt sein, welche sich zur optischen Sensierung im Infrarotbereich eignet.

Das Dokument kann optische Sicherheitsmerkmale, wie zum Beispiel ein aufgedrucktes oder auf einem Display des Dokuments angezeigtes Passbild, ein Wappen, Siegel oder andere Merkmale des Sicherheitsdrucks aufweisen. Ausführungsformen der erfindungsgemäßen Computermaus sind besonders vorteilhaft, da die Computermaus in ihrem ersten Betriebsmodus wie eine übliche Computermaus zum Beispiel zur Steuerung der Position eines Cursors auf einer graphischen Benutzeroberfläche verwendet werden kann, während die Computermaus in ihrem zweiten Betriebsmodus die Funktion eines RFID-Lesegeräts zum Lesen von Daten aus dem RFID-Chip eines Dokuments wahrnimmt, indem die Computermaus statt auf einer Unterlage auf einem Dokument positioniert und/oder bewegt wird.

Zur Integration der Funktion eines RFID-Lesegeräts zum Lesen beispielsweise des elektronischen Reisepasses oder des elektronischen Personalausweises und der Ausführung der hierzu erforderlichen kryptographischen Protokolle hat die Computermaus einen optischen Sensor zum Einscannen des Teilbereichs des Dokuments, beispielsweise also der MRZ oder der CAN. Hierdurch kann eine Information erfasst werden, die für die Durchführung des kryptographischen Protokolls erforderlich ist, beispielsweise des Basic Access Control (BAC) und/oder Extended Access Control (EAC) Protocols, wie es von der Internationalen Luftfahrtbehörde (ICAO) spezifiziert ist, und/oder des Password Authenticated Connection Establishment (PACE)-Protokolls, vergleiche hierzu Bundesamt für Sicherheit in der Informationstechnik (BSI, Technical Guideline TR-03110 sowie EP 1 891 607 B1).

Nach Ausführungsformen der Erfindung hat die Computermaus zumindest einen Mikroprozessor zur Ausführung von Programminstruktionen, welche diejenigen Schritte eines kryptographischen Protokolls implementieren, welche seitens des in die Computermaus integrierten RFID-Lesegeräts erforderlich sind, um lesend auf die in dem RFID-Chip des Dokuments gespeicherten Daten zuzugreifen. Die von dem Teilbereich des Dokuments durch Einscannen optisch erfasste Information geht in diesen kryptographischen Algorithmus zur Ermöglichung einer Berechtigungsprüfung für den lesenden Zugriff auf die Daten ein.

Zur Durchführung des kryptographischen Protokolls werden zwischen dem Prozessor der Computermaus und dem RFID-Chip des Dokuments über eine Radiofrequenz zum Beispiel mit einem Request/Response-Protokoll Daten ausgetauscht, insbesondere in sogenannten Application Data Units (APDUs), und zwar über die RF-Schnittstelle der Computermaus, an welche der Prozessor angeschlossen ist.

Ausführungsformen der Erfindung sind besonders vorteilhaft, da durch die Integration der Funktionalität eines RFID-Lesegeräts in eine Computermaus ein separates RFID-Lesegerät an dem Computerarbeitsplatz eines Benutzers entfallen kann. Dies hat einerseits Kostenvorteile, da ohnehin vorhandene Komponenten der Computermaus für die Integration der RFID-Funktionalität verwendet werden können, und hat andererseits Handhabungsvorteile sowie Sicherheitsvorteile für den Benutzer.

Insbesondere wird durch die Integration des Lesegeräts in die Computermaus sichergestellt, dass das Dokument nicht länger als notwendig im Erfassungsbereich des Lesegeräts bleibt, was bei einem separaten Lesegerät nicht der Fall ist. Wenn der Benutzer nämlich nach der Durchführung des Lesezugriffs weiter arbeiten möchte, so muss wieder in den ersten Betriebsmodus der Computermaus zurückgegangen werden, in dem kein Zugriff auf das Dokument möglich ist, da das in die Computermaus integrierte Lesegerät dann deaktiviert ist. Dies minimiert das Risiko, dass über zum Beispiel auf dem Computer installierte Malware der Versuch unternommen, über das Lesegerät einen unerlaubten Zugriff auf das Dokument durchzuführen, da nach dem Lesezugriff das in die Computermaus integrierte RFID Lesegerät deaktiviert und das Dokument aus dessen Erfassungsbereich zwangsläufig entfernt wird, um die Computermaus in dem ersten Betriebsmodus zu verwenden.

Nach einer Ausführungsform ist an der Unterseite der Computermaus eine Infrarotstrahlungsquelle angeordnet, die in dem zweiten Betriebsmodus eingeschaltet ist, wobei der erste optische Sensor der Computermaus in einem Infrarotspektralbereich strahlungssensitiv ist. Beispielsweise wird eine Infrarotstrahlungsquelle im Bereich 850-900 nm eingesetzt. Dies vereinfacht die Erfassung der Information von dem Teilbereich des Dokuments, wenn dieser mit einer speziellen Druckfarbe aufgedruckt ist, die im Infrarotbereich sichtbar ist.

Nach einer Ausführungsform der Erfindung ist an der Unterseite der Computermaus eine weitere Strahlungsquelle angeordnet, die Licht in einem sichtbaren Spektralbereich abgibt, insbesondere eine Weißlichtstrahlungsquelle. Der erste optische Sensor ist zusätzlich in diesem sichtbaren Spektralbereich sensitiv, um so die Erfassung eines oder mehrerer optischer Sicherheitsmerkmale des Dokuments zu ermöglichen. Der erste optische Sensor kann beispielsweise als Kamera mit einem Objektiv ausgebildet sein. Beispielsweise kann ein Kameratyp zum Einsatz kommen, wie er auch in sogenannten Webcams verwendet wird.

Nach einer Ausführungsform der Erfindung wird der erste optische Sensor sowohl in dem ersten Betriebsmodus als auch in dem zweiten Betriebsmodus verwendet: in dem ersten Betriebsmodus wird der erste optische Sensor als Positions- oder Bewegungssensor eingesetzt, wie das bei einer optischen Computermaus üblicherweise der Fall ist. Dagegen wird der erste optische Sensor in dem zweiten Betriebsmodus zum Einscannen des Teilbereichs des Dokuments für die Erfassung der Information verwendet. Hierdurch ist ein Kostenvorteil gegeben, da kein zusätzlicher optischer Sensor für den zweiten Betriebsmodus erforderlich ist. Es kann aber auch ein zusätzlicher zweiter optischer oder mechanischer Sensor vorgesehen sein, der in dem ersten Betriebsmodus als Positions- oder Bewegungssensor wirkt, während der erste optische Sensor dann inaktiv ist.

Nach einer Ausführungsform der Erfindung hat die Computermaus Eingabemittel zur Eingabe einer Kennung, insbesondere einer Personal Identification Number (PIN). Als Eingabemittel kann zum Beispiel eine Tastatur vorgesehen sein, die insbesondere in einem Rückenbereich der Computermaus angeordnet sein kann. Zusätzlich kann auch eine Anzeigevorrichtung, wie zum Beispiel ein LCD-Display, in die Computermaus integriert sein, zum Beispiel ebenfalls in deren Rückenbereich, um so zum Beispiel ein Klasse 2- oder Klasse 3-Lesegerät zu verwirklichen.

Die Eingabe der Kennung kann erforderlich sein, um das Dokument zur Freigabe einer Chipkartenfunktion freizuschalten und/oder im Rahmen einer Authentifizierung des Benutzers gegenüber dem Dokument. Alternativ oder zusätzlich zu der Kennung kann die Erfassung eines biometrischen Merkmals von dem Benutzer für die Nutzer-Authentifizierung erforderlich sein, wozu ein entsprechender Biometriesensor in die Computermaus integriert sein kann.

Nach einer Ausführungsform der Erfindung hat die Computermaus ein Bedienelement, wie zum Beispiel einen Bedienknopf, zur Wahl des ersten oder des zweiten Betriebsmodus. Diese Umschaltfunktion kann vollständig in der Computermaus selbst implementiert sein oder über ein Anwendungsprogramm des Computers erfolgen.

Nach einer Ausführungsform der Erfindung hat die Computermaus Zugriffsmittel zum Zugriff auf ein Berechtigungszertifikat der Computermaus.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, hier also der Computermaus oder einem ID-Provider-Computersystem, zuzuordnen. Beispielsweise kann das Zertifikat dem Standard X.509 oder einem anderen Standard entsprechen.

Unter einem "Berechtigungszertifikat" wird hier ein Zertifikat verstanden, welches eine zusätzliche Angabe des Umfangs einer Zugriffsberechtigung auf die in dem Dokument gespeicherten Daten angibt, also beispielsweise spezifiziert, auf welche der in dem Dokument gespeicherten Datengruppen lesend zugegriffen werden darf.

Das Berechtigungszertifikat kann lokal in einem elektronischen Speicher der Computermaus gespeichert sein. Alternativ kann das Berechtigungszertifikat an einer anderen Stelle gespeichert sein, wie zum Beispiel auf einem externen Servercomputer oder einem separaten ID-Token, wie zum Beispiel einer Chipkarte, welche einem berechtigten Nutzer zugeordnet ist. Im letzteren Fall ist die für den Zugriff berechtigte Entität also nicht unmittelbar die Computermaus, sondern ein berechtigter Benutzer, der diese Berechtigung zum Beispiel mit Hilfe einer entsprechenden Chipkarte nachweisen muss. Zu diesem Zweck kann in der Computermaus ein Chipkartenlesegerät implementiert sein, so dass die Computermaus auf ein in einer Chipkarte gespeichertes Berechtigungszertifikat zugreifen kann.

Nach einer Ausführungsform der Erfindung sind die in dem RFID Chip des Dokuments gespeicherten Daten, insbesondere zumindest ein Datenobjekt, digital signiert. Beim Lesen der Daten wird diese Signatur geprüft, beispielsweise mittels sogenannter Passive Authentication (PA), vgl. hierzu ebenfalls TR-03110.

In einem weiteren Aspekt betrifft die Erfindung ein elektronisches System mit zumindest einem Computer, wie zum Beispiel einem PC, und einer daran angeschlossenen erfindungsgemäßen Computermaus.

In einem weiteren Aspekt betrifft die Erfindung ein Verfahren zum Lesen von Daten aus einem Dokument mit Hilfe eines solchen elektronischen Systems.

Im Weiteren werden Ausführungsformen der Erfindung mit Bezugnahme auf die Zeichnungen näher erläutert. Es zeigen:
- Figur 1: ein Blockdiagramm zur Darstellung von Ausführungsformen einer erfindungsgemäßen Computermaus und eines erfindungsgemäßen elektronischen Systems,
- Figur 2: ein Blockdiagramm einer Ausführungsform eines Dokuments des elektronischen Systems,
- Figur 3: ein Blockdiagramm einer Ausführungsform eines erfindungsgemäßen Verfahrens,
- Figur 4: eine perspektivische Ansicht einer Ausführungsform einer erfindungsgemäßen Computermaus,
- Figur 5: eine Draufsicht auf eine Ausführungsform einer erfindungsgemäßen Computermaus mit einem Trackball.

Elemente der nachfolgenden Ausführungsformen, die einander entsprechen, sind mit identischen Bezugszeichen gekennzeichnet.

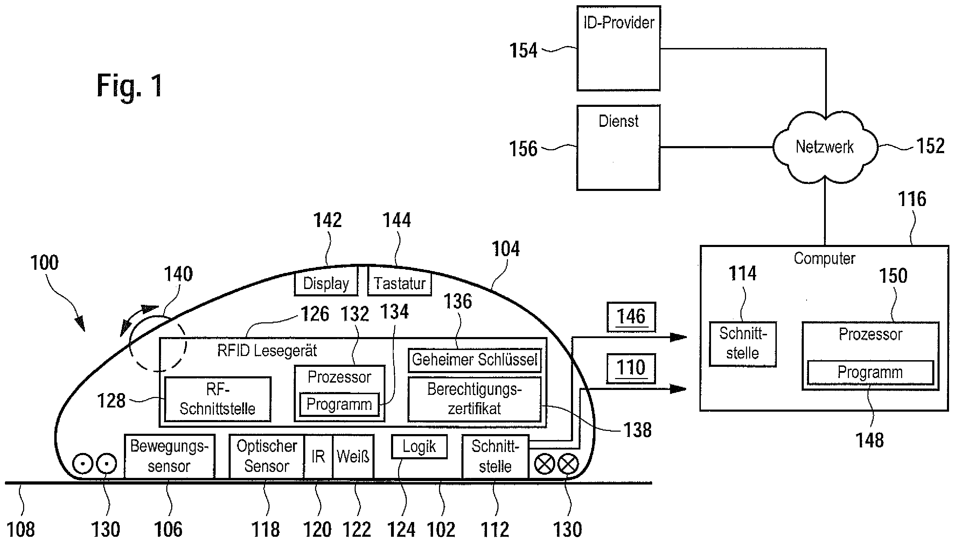

Die Figur 1 zeigt eine Computermaus 100 mit einem Gehäuse, das eine flache Unterseite 102 und eine bogenförmig gewölbte Oberseite 104 aufweist. Die Computermaus 100 hat einen Bewegungssensor 106, welcher mechanisch oder optisch ausgebildet sein kann. Bei einer Bewegung der Computermaus 100 über eine Unterlage 108 gibt der Bewegungssensor Signale 110 ab, die eine Relativbewegung der Computermaus 100 zu der Unterlage 108 anzeigen, und welche von einer Schnittstelle 112 der Computermaus 100 an eine entsprechende Schnittstelle 114 eines Computers 116, zum Beispiel eines PCs, übertragen werden.
Die Schnittstelle 112 kann kontaktbehaftet, zum Beispiel als USB-Schnittstelle, oder für eine kontaktlose Übertragung an die Schnittstelle 114 ausgebildet sein.

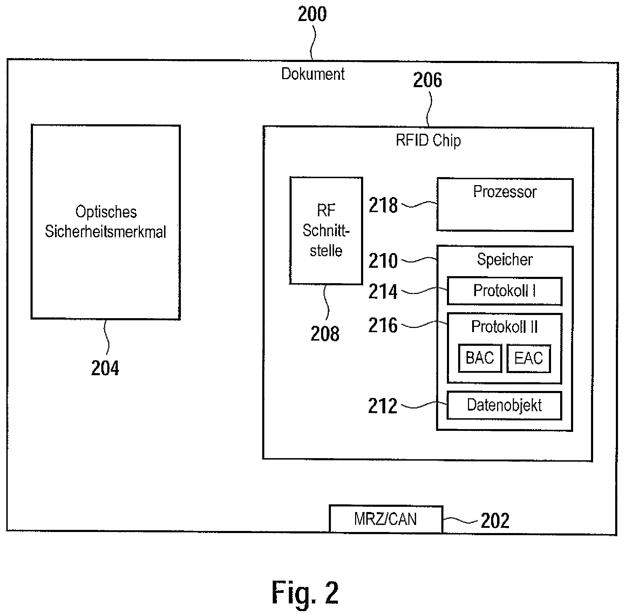

Die Computermaus 100 hat einen optischen Sensor 118, der zum Einscannen zumindest eines Teilbereichs 202 eines Dokuments 200 (vergleiche Figur 2) ausgebildet ist. Beispielsweise kann der optische Sensor 118 eine Kamera mit einem Objekt aufweisen. Der optische Sensor 118 kann so ausgebildet sein, dass er sowohl in einem sichtbaren Spektralbereich als auch in einem nicht-sichtbaren Spektralbereich, insbesondere in einem Infrarotbereich, sensitiv ist. Die Computermaus 100 kann dementsprechend eine Strahlungsquelle 120 für infrarot (IR)-Strahlung und eine Strahlungsquelle 122 für Strahlung in einem sichtbaren Spektralbereich, insbesondere eine Weißlichtquelle, aufweisen. Dies ist vorteilhaft, um nacheinander eine Information von dem Teilbereich des Dokuments mit Hilfe der IR-Strahlungsquelle 120 zu erfassen und ein oder mehrere optische Sicherheitsmerkmale des Dokuments mit Hilfe der Strahlungsquelle 122 zu erfassen, um diese überprüfen zu können.

Die Computermaus 100 hat einen ersten Betriebsmodus, in dem der Bewegungssensor 106 aktiviert ist, um eine Bewegung der Computermaus zu erfassen, so dass die Signale 110 gesendet werden, und einen zweiten Betriebsmodus, in dem der optische Sensor 118 aktiv ist, um den Teilbereich des Dokuments einzuscannen sowie - je nach Ausführungsform - optische Sicherheitsmerkmale von dem Dokument zu erfassen.

Anstelle dessen kann auf den Bewegungssensor 106 verzichtet werden, wenn der optische Sensor 118 in dem ersten Betriebsmodus als optischer Bewegungssensor fungiert, wie das an sich für optische Computermäuse bekannt ist.

Zum Umschalten zwischen dem ersten Betriebsmodus und dem zweiten Betriebsmodus sowie für die entsprechende Aktivierung bzw. Deaktivierung der Komponenten der Computermaus je nach dem gewählten Betriebsmodus kann die Computermaus 100 eine Logikkomponente 124 aufweisen, wie zum Beispiel eine festverdrahtete Logikschaltung oder einen Mikrocontroller.

Die Computermaus 100 beinhaltet ein integriertes RFID-Lesegerät 126 zum Lesen von Daten aus dem Dokument 200. Das RFID-Lesegerät 126 hat eine Radiofrequenz (RF) Schnittstelle 128 zur Durchführung eines RFID- oder NFC-Übertragungsverfahrens, welche an einer Antenne angeschlossen ist, die ein oder mehrere Antennenwicklungen 130 aufweist, durch welche eine Antennenspule gebildet wird.

In der hier betrachteten Ausführungsform sind die Antennenwicklungen 130 nebeneinander auf der Unterseite 102 im Inneren des Gehäuses der Computermaus 100 angeordnet. Alternativ können die Antennenwicklungen 130 auch in der die Unterseite 102 bildenden Gehäusewandung oder auf der äußeren Oberfläche der Unterseite 102 angeordnet sein, um einen möglichst hohen Kopplungsfaktor zu erreichen. Vorzugsweise ist die Antennenspule koplanar zu der Unterseite 102 sowie der Unterlage 108 angeordnet, so dass die Öffnung der Antennenspule nach unten ausgerichtet ist, wie in der Fig. 1 gezeigt.

Das RFID-Lesegeräte 126 beinhaltet zumindest einen Prozessor 132 zur Ausführung von Programminstruktionen 134 sowie zumindest einen elektronischen Speicher mit einem geschützten Speicherbereich 136 zur Speicherung eines geheimen Schlüssels und einem Speicherbereich 138 zur Speicherung eines dem geheimen Schlüssel zugeordneten Berechtigungszertifikats.

Alternativ können der geheime Schlüssel und das Berechtigungszertifikat auf einer externen Komponente, wie zum Beispiel einer Chipkarte, gespeichert sein. Hierzu kann die Computermaus 100 ein Chipkartenlesegerät beinhalten, welches zum Einführen einer solchen Chipkarte dient, so dass das RFID-Lesegerät 126 über dieses Chipkartenlesegerät auf die Chipkarte zugreifen kann. Insbesondere kann das RFID-Lesegerät 126 diesbezüglich entsprechend DE 10 2006 027 253 A1 ausgebildet sein, deren Offenbarungsgehalt durch Bezugnahme mit zum Offenbarungsgehalt der vorliegenden Patentanmeldung gemacht wird.

Die Computermaus 100 kann ferner ein Mausrad (sogenanntes "mouse wheel") 140 aufweisen, welches beispielsweise zwischen einer linken und einer rechten Maustaste angeordnet sein kann. Das Mausrad 140 dient in dem ersten Betriebsmodus in üblicher Art und Weise zur Eingabe eines Navigationskommandos oder einer Nutzerauswahl über die graphische Nutzeroberfläche des Computers 116. In dem zweiten Betriebsmodus kann das Mausrad deaktiviert, das heißt funktionslos sein, oder es kann zur Eingabe von Daten oder Nutzerkommandos in das RFID-Lesegerät 126 ausgebildet sein.

Die Computermaus 100 kann ferner ein Display 142 und/oder eine Tastatur 144 aufweisen, welche beispielsweise hinter dem Mausrad 140 in einem Rückenbereich der Oberseite 104 der Computermaus 100 angeordnet sein können, wie in der Figur 1 dargestellt.
Auf dem Display 102 kann zum Beispiel eine Eingabeaufforderung des RFID-Lesegeräts 126 an den Nutzer ausgegeben werden, so dass dieser eine geheime Kennung, wie zum Beispiel eine PIN über die Tastatur 144 eingibt. Alternativ oder zusätzlich zu der Tastatur 144 kann ein Biometriesensor, insbesondere ein Fingerabdrucksensor oder eine Kamera für einen Irisscan, in dem Gehäuse der Computermaus 100 integriert sein, um ein entsprechendes biometrisches Merkmal von dem Benutzer alternativ oder zusätzlich zu der Kennung zu erfassen. Die Kennung und/oder das biometrische Merkmal können zur Authentifizierung des Benutzers gegenüber dem Dokument 200, zum Beispiel nach dem PACE-Protokoll dienen.

In dem zweiten Betriebsmodus kann beispielsweise so vorgegangen werden, dass zunächst der Nutzer seine PIN über die Tastatur 144 eingibt, um sich über das RFID-Lesegerät 126 gegenüber dem Dokument 200 zu authentifizieren. Ferner wird die Strahlungsquelle 120 eingeschaltet, so dass der optische Sensor 118 den Teilbereich des Dokuments einscannt und die darin beinhaltete Information erfasst, welche in das RFID-Lesegerät 126 eingegeben wird, um in dem zwischen dem RFID-Lesegerät 126 und dem Dokument 200 ablaufenden krytographischen Protokoll verwendet zu werden.

Beispielsweise wird durch Durchführung der Programminstruktionen 134 aus der Information ein kryptographischer Schlüssel abgeleitet, der Voraussetzung dafür ist, dass das RFID-Lesegerät 126 auf das Dokument 200 lesend zugreifen kann. Für eine solche Berechtigungsprüfung kann ferner der geheime Schlüssel benötigt werden, insbesondere zur Durchführung eines Challenge-Response-Protokolls, sowie das Berechtigungszertifikat, vergleiche hierzu auch die technische Richtlinie des BSI TR-03110.

Nachdem die Berechtigungsprüfung erfolgreich abgeschlossen worden ist und die Daten aus dem Dokument 200 gelesen worden sind, werden diese über die Schnittstelle 112 durch Signale 146 an die Schnittstelle 114 des Computers 116 übertragen.

Die Auswahl des ersten oder des zweiten Betriebsmodus kann durch ein Bedienelement der Computermaus erfolgen, beispielsweise über die Tastatur 144. Ferner kann die Umschaltung des Betriebsmodus automatisch dann erfolgen, wenn zum Beispiel durch den optischen Sensor 118 oder den Bewegungssensor 106 sensiert wird, dass die Computermaus 100 von der Unterlage 108 abgehoben worden ist, da dies darauf hindeutet, dass der Benutzer das Dokument 200 unter die Computermaus 100 legen möchte oder das Dokument 200 von dort entfernen möchte. Ferner kann die Umschaltung des Betriebsmodus zum Beispiel durch Drücken des Mausrads 140 erfolgen. Eine weitere Möglichkeit ist, dass die Auswahl des Betriebsmodus mit Hilfe eines Anwendungsprogramms 148 erfolgt, welches von einem Prozessor 150 des Computers 116 ausgeführt wird und welches mit der Computermaus 100 interoperabel ist. Insbesondere kann das Anwendungsprogramm 148 ein Treiberprogramm für die Computermaus 100 beinhalten. Das Anwendungsprogramm 148 kann auch zumindest Teile des kryptographischen Protokolls implementieren, so dass der Prozessor 132 weniger leistungsfähig sein kann.

Die in Form der Signale 146 von der Computermaus 100 an den Computer 116 übertragenen Daten können dort lokal zum Beispiel von dem Anwendungsprogramm 148 weiter verarbeitet werden.

Alternativ oder zusätzlich hat der Computer 116 eine Netzwerkschnittstelle zu einem Netzwerk 152, wie zum Beispiel dem Internet, haben, über welche der Computer 116 mit einem ID-Provider-Computersystem 154 und ein Dienst-Computersystem 156 verbunden ist. In diesem Fall werden die Daten über die Signale 146 mit Endezu-Ende-Verschlüsselung zwischen dem Dokument 200 und dem ID-Provider-Computersystem 154 übertragen. Die Daten können in diesem Fall Attribute beinhalten, welche von dem ID-Provider-Computersystem 154 signiert und an das Dienst-Computersystem 156 weitergeleitet werden, wie es an sich zum Beispiel aus DE 10 2008 000 067 A1 bekannt ist; in diesem Fall sind der geheime Schlüssel und das Berechtigungszertifikat dem ID-Provider-Computersystem 154 zugeordnet.

Die Prüfung des optischen Sicherheitsmerkmals wird lokal von der Computermaus 100, zum Beispiel durch die Logik 124 oder durch Ausführung der Programminstruktionen 134 durchgeführt, und/oder das von dem optischen Sensor 118 aufgenommene Bild des oder der Sicherheitsmerkmale wird über die Schnittstelle 112 an den Computer 116 übertragen, welcher diese Auswertung vornimmt.

Die Figur 2 zeigt ein Dokument 200 mit einem optischen Sicherheitsmerkmal 204, wie zum Beispiel einem Passbild, dem Teilbereich 202 mit zum Beispiel der MRZ und/oder CAN sowie einem in den Dokumentenkörper des Dokuments 200 integrierten RFID-Chip 206. Der RFID-Chip 206 hat eine RF-Schnittstelle 208, die an eine in dem Dokumentenkörper des Dokuments 200 verlaufende Antennenspule angeschlossen ist und welche mit der RF-Schnittstelle 128 eine RF-Kommunikation ermöglicht.

Der RFID-Chip 206 hat ferner einen Speicher 210 mit einem geschützten Speicherbereich zur Speicherung eines Datenobjekts 212 sowie von Programminstruktionen 214 und Programminstruktionen 216 zur Ausführung durch einen Prozessor 218 des RFID-Chips 206, durch welche zum Beispiel zwei verschiedene kryptographische Protokolle I bzw. II implementiert werden. Beispielsweise handelt es sich bei dem Protokoll I um das vom BSI spezifizierte PACE-Protokoll, das heißt ein Passwort-basiertes Diffie-Hellman-Schlüssel-Vereinbarungsprotokoll, wozu die Eingabe der Kennung, das heißt eines Passworts, zum Beispiel über die Tastatur 144 erforderlich ist.

Das Protokoll II kann dagegen sowohl ein BAC- als auch ein EAC-Protokoll implementieren, beispielsweise so wie von der ICAO spezifiziert. Das Dokument 200 unterstützt also die beiden alternativen Protokolle I und II, deren erfolgreiche Durchführung jeweils eine Voraussetzung für einen externen Lesezugriff auf das Datenobjekt 212 sind.
Die Programminstruktionen 134 implementieren die das RFID-Lesegerät 126 betreffenden Schritte zumindest eines dieser kryptographischen Protokolle I oder II. Wenn beispielsweise die Programminstruktionen 134 das Protokoll I unterstützen, so wird dieses zur Durchführung der Berechtigungsprüfung vor einem Lesezugriff durchgeführt, im gegenteiligen Fall das Protokoll II. Beispielsweise kann so vorgegangen werden, dass zunächst immer die Durchführung des Protokolls I versucht wird; wenn dieser Versuch fehlschlägt, wird anschließend die Durchführung des Protokolls II versucht.

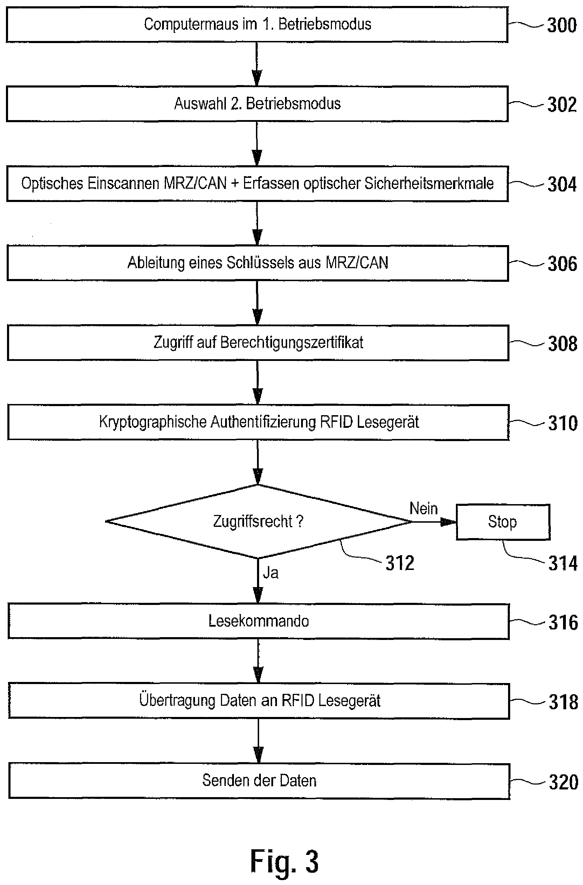

Die Figur 3 zeigt ein entsprechendes Flussdiagramm.

In dem Schritt 300 wird die Computermaus zunächst in ihrem ersten Betriebsmodus in üblicher Art und Weise zur Bewegung eines Cursors auf einer graphischen Nutzerschnittstelle (Graphical User Interface - GUI) verwendet. Zur Durchführung eines Lesezugriffs auf das Dokument 200 wird dann in dem Schritt 302 der zweite Betriebsmodus der Computermaus ausgewählt. Die Computermaus wird von dem Benutzer auf das Dokument gestellt oder geschoben, so dass sich das Dokument zwischen der Unterlage und der Unterseite der Computermaus befindet. In dem Schritt 304 erfolgt die Erfassung der Information aus dem Teilbereich des Dokuments durch den optischen Sensor 118 sowie optional auch die Erfassung optischer Sicherheitsmerkmale des Dokuments sowie deren Überprüfung.

Mit Hilfe der in dem Schritt 304 erfassten Information wird anschließend ein kryptographisches Protokoll zur Durchführung der Berechtigungsprüfung durchgeführt, beispielsweise das Protokoll I oder II. Hierzu kann es erforderlich sein, dass der Nutzer über die Tastatur 144 der Computermaus 100 oder über die Tastatur des Computers 116 eine Kennung eingibt und/oder dass von dem Benutzer ein biometrisches Merkmal erfasst wird. Ferner kann es für die Durchführung des kryptographischen Protokolls je nach Ausführungsform erforderlich sein, dass das RFID Lesegerät 126 auf einen Speicher zugreifen kann, in dem ein valides Berechtigungszertifikat gespeichert ist.

In der hier betrachteten Ausführungsform wird in dem Schritt 306 aus der erfassten Information, das heißt beispielsweise aus der MRZ oder der CAN, ein symmetrischer kryptographischer Schlüssel abgeleitet, der zur Verschlüsselung der nachfolgenden Kommunikation zwischen dem RFID-Lesegerät 126 und dem RFID-Chip 206 verwendet wird. Anschließend erfolgt eine Berechtigungsprüfung mit Hilfe des Berechtigungszertifikats zum Beispiel nach einem Challenge-Response-Protokoll in dem Schritt 310 für eine kryptographische Authentifizierung zum Beispiel des RFID-Lesegeräts 126, nachdem zuvor in dem Schritt 308 auf das Berechtigungszertifikat zugegriffen worden ist.

In dem Schritt 312 wird dann geprüft, ob das kryptographische Protokoll erfolgreich durchgeführt und in dem Berechtigungszertifikat ausreichende Zugriffsrechte spezifiziert sind. Ist dies nicht der Fall, wird in dem Schritt 314 abgebrochen. Im gegenteiligen Fall, wird in dem Schritt 316 mit Hilfe eines Lesekommandos auf das Datenobjekt 212 zugegriffen, was anschließend in dem Schritt 318 je nach Ausführungsform verschlüsselt oder unverschlüsselt an das RFiD-Lesegerät 126 übertragen und dann in dem Schritt 320 durch Signale 146 gesendet wird.

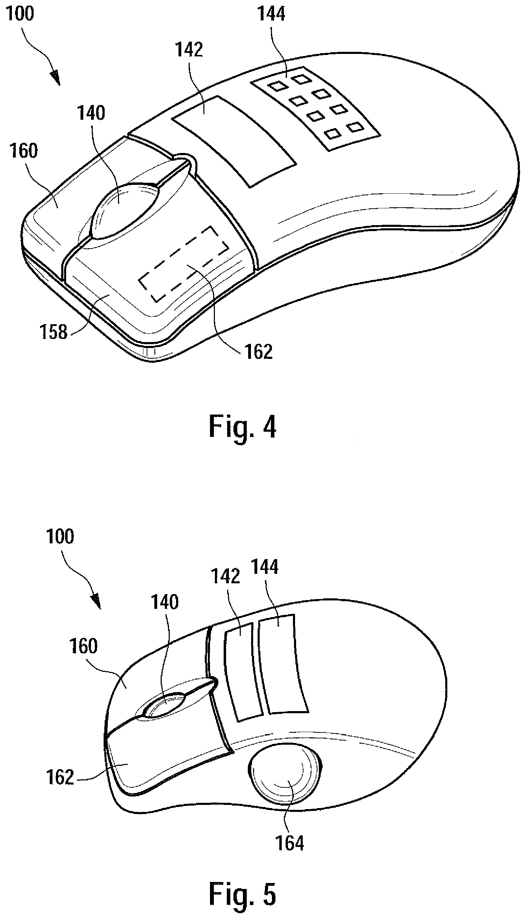

Die Figur 4 zeigt eine Ausführungsform einer Computermaus 100 mit einer linken Maustaste 158 und einer rechten Maustaste 160, zwischen denen das Mausrad 140 angeordnet ist. Zum Beispiel auf der Maustante 158 kann ein Fingerabdrucksensor 162 angeordnet sein, um einen Fingerabdruck eines Benutzers zu erfassen. Ein weiterer Fingerabdrucksensor kann auf der anderen Maustaste 160 angeordnet sein, so dass gleichzeitig ein Fingerabdruck vom Zeigefinger und vom Mittelfinger eines Benutzers erfasst werden können.

Die Figur 5 zeigt eine Ausführungsform einer Computermaus 100 mit einem Trackball 164. In dem ersten Betriebsmodus der Computermaus 100 wird bei dieser Ausführungsform nicht die Relativbewegung der Computermaus 100 zu der Unterlage 108, sondern die Bewegung des Trackballs 164 relativ zum Gehäuse der Computermaus 100 erfasst. Ansonsten ist die Funktionalität der Computermaus 100 analog zu den Ausführungsformen der Figuren 1 bis 4.

### Bezugszeichenliste

- 100: Computermaus
- 102: Unterseite
- 104: Oberseite
- 106: Bewegungssensor
- 108: Unterlage
- 110: Signale
- 112: Schnittstelle
- 114: Schnittstelle
- 116: Computer
- 118: optischer Sensor
- 120: Strahlungsquelle
- 122: Strahlungsquelle
- 124: Logikkomponente
- 126: RFID-Lesegerät
- 128: RF-Schnittstelle
- 130: Antennenwicklung
- 132: Prozessor
- 134: Programminstruktionen
- 136: Speicherbereich
- 138: Speicherbereich
- 140: Mausrad
- 142: Display
- 144: Tastatur
- 146: Signale
- 148: Anwendungsprogramm
- 150: Prozessor
- 152: Netzwerk
- 154: ID-Providercomputersystem
- 156: Dienst-Computersystem
- 158: Maustaste
- 160: Maustaste
- 162: Fingerabdrucksensor
- 164: Trackball
- 200: Dokument
- 202: Teilbereich
- 204: Optisches Sicherheitsmerkmal
- 206: RFID-Chip
- 208: RF-Schnittstelle
- 210: Speicher
- 212: Datenobjekt
- 214: Speicherbereich
- 216: Speicherbereich
- 218: Prozessor

## Patentansprüche

1. Computermaus (100) mit zumindest einem ersten an der Unterseite (102) der Computermaus angeordneten optischen Sensor (118), der zum Einscannen zumindest eines Teilbereichs (202) eines Dokuments (200) ausgebildet ist, und mit einer RF-Schnittstelle (128) für eine drahtlose Kommunikation mit einem RFID-Chip (206) des Dokuments, wobei die Computermaus einen ersten Betriebsmodus zur Erfassung einer Position oder Bewegung der Computermaus relativ zu einer Unterlage und einem zweiten Betriebsmodus zur Durchführung eines Lesezugriffs auf den RFID-Chip des Dokuments aufweist, wobei die Computermaus für das Einscannen des Teilbereichs in dem zweiten Betriebsmodus zur Ermöglichung einer Berechtigungsprüfung für den Lesezugriff ausgebildet ist, und mit Prozessormitteln (132, 134) zur Ausführung von Schritten eines kryptographischen Protokolls für die Durchführung der Berechtigungsprüfung, **dadurch gekennzeichnet, dass** an der RF-Schnittstelle (128) eine Antenne angeschlossen ist, die eine oder mehrere Antennenwicklungen (130) aufweist, deren Öffnung auf die Unterseite (102) der Computermaus ausgerichtet ist.

2. Computermaus (100) nach Anspruch 1, mit einer Infrarotstrahlungsquelle (120), wobei der erste optische Sensor (118) in einem Infrarotspektralbereich strahlungssensitiv ist.

3. Computermaus (100) nach Anspruch 2, mit einer Strahlungsquelle (122), die zur Abgabe von Licht in einem sichtbaren Spektralbereich ausgebildet ist, insbesondere mit einer Weißlichtstrahlungsquelle, wobei der erste optische Sensor (118) zusätzlich im Bereich des von der Strahlungsquelle abgegebenen sichtbaren Spektralbereichs strahlungssensitiv ist, um eine Erfassung eines optischen Sicherheitsmerkmals des Dokuments (200) zu ermöglichen.

4. Computermaus (100) nach Anspruch 1, 2 oder 3, wobei der erste optische Sensor (118) als eine Kamera mit einem Objektiv ausgebildet ist.

5. Computermaus (100) nach einem der vorhergehenden Ansprüche, wobei der erste optische Sensor (118) in dem ersten Betriebsmodus als Bewegungssensor wirkt.

6. Computermaus (100) nach einem der vorhergehenden Ansprüche 1 bis 4, mit einem zweiten Sensor (106), der in dem ersten Betriebsmodus als Positions- oder Bewegungssensor dient.

7. Computermaus (100) nach einem der vorhergehenden Ansprüche, mit Eingabemitteln (144) zur Eingabe einer Kennung, insbesondere einer PIN, wobei die Prozessormittel dazu ausgebildet sind, die eingegebene Kennung für die Ausführung des kryptographischen Protokolls zu verwenden.

8. Computermaus (100) nach einem der vorhergehenden Ansprüche, mit einer Anzeigevorrichtung (142), welche vorzugsweise an der Oberseite (104) der Computermaus, insbesondere deren Rückenbereich, angeordnet ist.

9. Computermaus (100) nach einem der vorhergehenden Ansprüche mit einem Biometriesensor (162), insbesondere einem Fingerabdrucksensor, zur Erfassung eines biometrischen Merkmals eines Benutzers, wobei das erfasste biometrische Merkmal in den kryptographischen Algorithmus eingeht.

10. Computermaus (100) nach einem der vorhergehenden Ansprüche mit einem Bedienelement (158, 160) zur Wahl des ersten oder des zweiten Betriebsmodus.

11. Computermaus (100) nach einem der vorhergehenden Ansprüche, mit Zugriffsmitteln (132, 134) zum Zugriff auf ein Berechtigungszertifikat (138), um gegenüber dem RFID-Chip des Dokuments die Berechtigung für den Lesezugriff auf die Daten nachzuweisen.

12. Computermaus (100) nach Anspruch 11, mit einem Speicher (138) zur Speicherung des Berechtigungszertifikats (138), wobei die Zugriffsmittel zur Zugriff auf den Speicher ausgebildet sind, um das Berechtigungszertifikat (138) auszulesen.

13. Elektronisches System mit zumindest einem Computer (116, 154, 156) und einer Computermaus (100) nach einem der vorhergehenden Ansprüche 1 bis 12, wobei der Computer dazu ausgebildet ist, in dem ersten Betriebsmodus der Computermaus erste Signale (110) von der Computermaus zu empfangen, die die Bewegung oder die Position der Computermaus auf einer Unterlage (108) anzeigen, und wobei der Computer dazu ausgebildet ist, in dem zweiten Betriebsmodus zweite Signale (146) von der Computermaus zu empfangen, welche aus dem RFID-Chip (206) des Dokuments (200) ausgelesene Daten (212) beinhalten.

14. Elektronisches System nach Anspruch 13, wobei auf dem Computer (116) ein Anwendungsprogramm (148) zur Kommunikation mit der Computermaus (100) und zur Wahl des ersten oder zweiten Betriebsmodus installiert ist.

15. Verfahren zum Lesen von Daten aus einem Dokument (200) mit Hilfe eines elektronischen Systems nach Anspruch 13 oder 14, wobei das Dokument (200) eine optisch lesbare Information und einen RFID-Chip (206) aufweist, in dem geschützte Daten (212) gespeichert sind, mit folgenden Schritten:
- Auswahl des zweiten Betriebsmodus der Computermaus,
- Lesen der Information von dem Dokument durch den ersten optischen Sensor,
- Durchführung eines kryptographischen Protokolls mit dem RFID-Chip, wobei die Information in den kryptographischen Algorithmus eingeht,
- Durchführung eines Lesezugriffs auf die Daten unter der Voraussetzung, dass der kryptographische Algorithmus erfolgreich durchgeführt worden ist,
- Übertragung der Daten von der Computermaus an den Computer.

16. Verfahren nach Anspruch 15, wobei sich die Computermaus (100) initial in ihrem ersten Betriebsmodus befindet, und durch eine Benutzereingabe in das Anwendungsprogramm des Computers (116) der zweite Betriebsmodus ausgewählt wird.

17. Verfahren nach Anspruch 16, wobei die Auswahl des zweiten Betriebsmodus mit Hilfe der Computermaus (100) erfolgt.

## Claims

1. A computer mouse (100) comprising at least one first optical sensor (118) arranged on the lower face (102) of the computer mouse, said sensor being designed to scan at least one sub-region (202) of a document (200), and comprising an RF interface (128) for wireless communication with an RFID chip (206) of the document, wherein the computer mouse has a first operating mode for detecting a position or movement of the computer mouse relative to an underlying surface and a second operating mode for performing read access to the RFID chip of the document, wherein the computer mouse, in order to scan the sub-region in the second operating mode, is designed to allow an authorisation check for the read access, and comprising processor means (132, 134) for carrying out steps of a cryptographic protocol for performing the authorisation check, **characterised in that** an antenna is connected to the RF interface (128), which antenna has one or more antenna windings (130), the opening of which is oriented towards the lower face (102) of the computer mouse.

2. The computer mouse (100) according to claim 1, comprising an infrared radiation source (120), wherein the first optical sensor (118) is sensitive to radiation in an infrared spectral range.

3. The computer mouse (100) according to claim 2, comprising a radiation source (122) which is designed to emit light in a visible spectral range, in particular comprising a white light radiation source, wherein the first optical sensor (118) is additionally sensitive to radiation in the region of the visible spectral range emitted by the radiation source so as to enable detection of an optical security feature of the document (200).

4. The computer mouse (100) according to claim 1, 2 or 3, wherein the first optical sensor (118) is designed as a camera with a lens.

5. The computer mouse (100) according to any one of the preceding claims, wherein the first optical sensor (118) acts in the first operating mode as a motion sensor.

6. The computer mouse (100) according to any one of preceding claims 1 to 4, comprising a second sensor (106), which serves in the first operating mode as a position or motion sensor.

7. The computer mouse (100) according to any one of the preceding claims, comprising input means (144) for inputting an identifier, in particular a PIN, wherein the processor means are designed to use the input identifier in order to carry out the cryptographic protocol.

8. The computer mouse (100) according to any one of the preceding claims, comprising a display device (142), which preferably is arranged on the upper side (104) of the computer mouse, in particular in the back region thereof.

9. The computer mouse (100) according to any one of the preceding claims, comprising a biometric sensor (162), in particular a fingerprint sensor, for capturing a biometric feature of a user, wherein the captured biometric feature is included cryptographic algorithm.

10. The computer mouse (100) according to any one of the preceding claims, comprising an operator element (158, 160) for choosing the first or the second operating mode.

11. The computer mouse (100) according to any one of the preceding claims, comprising access means (132, 134) for accessing an authorisation certificate (138) in order to verify, to the RFID chip of the document, the authorisation for read access to the data.

12. The computer mouse (100) according to claim 11, comprising a memory (138) for storing the authorisation certificate (138), wherein the access means are designed for access to the memory in order to read the authorisation certificate (138).

13. An electronic system comprising at least a computer (116, 154, 156) and a computer mouse (100) according to any one of preceding claims 1 to 12, wherein the computer is designed in the first operating mode of the computer mouse to receive first signals (110) from the computer mouse which indicate the movement or the position of the computer mouse on an underlying surface (108), and wherein the computer is designed in the second operating mode to receive second signals (146) from the computer mouse which contain data (212) read from the RFID chip (206) of the document (200).

14. The electronic system according to claim 13, wherein an application program (148) for communication with the computer mouse (100) and for choosing the first or second operating mode is installed on the computer (116).

15. A method for reading data from a document (200) with the aid of an electronic system according to claim 13 or 14, wherein the document (200) comprises optically readable information and an RFID chip (206), in which protected data (212) are stored, said method comprising the following steps:
- selecting the second operating mode of the computer mouse,
- reading the information from the document by the first optical sensor,
- carrying out a cryptographic protocol with the RFID chip, wherein the information is included in the cryptographic algorithm,
- granting read access to the data on the condition that the cryptographic algorithm has been carried out successfully,
- transmitting the data from the computer mouse to the computer.

16. The method according to claim 15, wherein the computer mouse (100) is initially in its first operating mode, and the second operating mode is selected by means of a user input in the application program of the computer (116).

17. The method according to claim 16, wherein the second operating mode is selected with the aid of the computer mouse (100).

## Revendications

1. Souris d'ordinateur (100) dotée d'au moins un premier capteur optique (118) disposé sur la face inférieure (102) de la souris d'ordinateur, qui est prévu pour le balayage d'au moins une zone partielle (202) d'un document (200), et dotée d'une interface RF (128) pour une communication sans fil avec une puce RFID (206) du document, où la souris d'ordinateur présente un premier mode de fonctionnement pour la détection d'une position ou d'un mouvement de la souris d'ordinateur par rapport un dossier et un second mode de fonctionnement pour l'exécution d'un accès en lecture vis-à-vis de la puce RFID du document, où la souris d'ordinateur est conçue pour le balayage de la zone partielle dans le second mode de fonctionnement afin de permettre une vérification de l'autorisation pour l'accès en lecture, et est dotée de moyens de processeur (132, 134) pour l'exécution des étapes d'un protocole cryptographique destiné à la réalisation de la vérification d'autorisation, **caractérisé en ce qu'**une antenne est raccordée à l'interface RF (128), qui présente un ou plusieurs enroulements d'antenne (130) dont l'ouverture est orientée vers la face inférieure (102) de la souris d'ordinateur.

2. Souris d'ordinateur (100) selon la revendication 1, dotée d'une source de rayonnement infrarouge (120), où le premier capteur optique (118) est sensible au rayonnement dans le domaine spectral infrarouge.

3. Souris d'ordinateur (100) selon la revendication 2, dotée d'une source de rayonnement (122) qui est conçue pour l'émission de lumière dans un domaine spectral visible, notamment dotée d'une source de rayonnement de lumière blanche, où le premier capteur optique (118) est en outre sensible au rayonnement dans la région du domaine spectral visible délivré par la source de rayonnement afin de permettre une détection d'une caractéristique de sécurité optique du document (200).

4. Souris d'ordinateur (100) selon les revendications 1, 2 ou 3, où le premier capteur optique (118) est conçu sous la forme d'une caméra avec un objectif.

5. Souris d'ordinateur (100) selon l'une des revendications précédentes, dans laquelle le premier capteur optique (118) agit en tant que capteur de mouvement dans le premier mode de fonctionnement.

6. Souris d'ordinateur (100) selon l'une des revendications 1 à 4, dotée d'un deuxième capteur (106) qui sert de capteur de mouvement ou de capteur de position dans le premier mode de fonctionnement.

7. Souris d'ordinateur (100) selon l'une des revendications précédentes, dotée de moyens de saisie (144) pour la saisie d'un identifiant, notamment d'un code PIN, où les moyens de processeurs sont conçus pour employer l'identifiant saisi pour la réalisation du protocole cryptographique.

8. Souris d'ordinateur (100) selon l'une des revendications précédentes, dotée d'un dispositif d'affichage (142), lequel est disposé de préférence sur la face supérieure (104) de la souris d'ordinateur, notamment sa zone dorsale.

9. Souris d'ordinateur (100) selon l'une des revendications précédentes, dotée d'un capteur de biométrie (162), notamment d'un capteur d'empreintes digitales, pour la détection d'une caractéristique d'un utilisateur, où la caractéristique biométrique détectée fait partie de l'algorithme cryptographique.

10. Souris d'ordinateur (100) selon l'une des revendications précédentes, dotée d'un élément d'actionnement (158, 160) pour le choix du premier ou du second mode de fonctionnement.

11. Souris d'ordinateur (100) selon l'une des revendications précédentes, dotée de moyens d'accès (132, 134) pour un accès vis-à-vis d'un certificat d'autorisation (138) afin de prouver l'autorisation pour l'accès en lecture des données vis à vis de la puce RFID du document.

12. Souris d'ordinateur (100) selon la revendication 11, dotée d'une mémoire (138) pour le stockage du certificat d'autorisation (138), où les moyens d'accès sont conçus pour l'accès à la mémoire afin de lire le certificat d'autorisation (138).

13. Système électronique doté au moins d'un ordinateur (116, 154, 156) et d'une souris d'ordinateur (100) selon l'une des revendications précédentes 1 à 12, où l'ordinateur est conçu pour recevoir des premiers signaux (110) de la souris d'ordinateur dans le premier mode de fonctionnement de la souris d'ordinateur, qui indiquent le mouvement ou la position de la souris d'ordinateur sur un dossier (108), et où l'ordinateur est conçu pour recevoir des deuxièmes signaux (146) de la souris d'ordinateur dans le deuxième mode de fonctionnement, lesquels contiennent des données (212) lues à partir de la puce RFID (206) du document (200).

14. Système électronique selon la revendication 13, dans lequel un programme d'application (148) est installé pour une communication avec la souris d'ordinateur (100) et pour le choix des premier ou second modes de fonctionnement.

15. Procédé de lecture de données à partir d'un document (200) à l'aide d'un système électronique selon la revendication 13 ou 14, où le document (200) présente une information lisible optiquement et une puce RFID (206), dans laquelle des données protégées (212) sont stockées, avec les étapes suivantes :
- le choix du deuxième mode de fonctionnement de la souris d'ordinateur,
- la lecture des informations du document par le premier capteur optique,
- l'exécution d'un protocole cryptographique avec la puce RFID, où l'information fait partie de l'algorithme cryptographique.
- l'exécution d'un accès en lecture des données moyennant la condition que l'algorithme cryptographique a été exécuté avec succès,
- la transmission des données par la souris d'ordinateur vers l'ordinateur.

16. Procédé selon la revendication 15, dans lequel la souris d'ordinateur (100) se trouve initialement dans son premier mode de fonctionnement et le second mode de fonctionnement est choisi par une saisie d'utilisateur au niveau du programme d'application de l'ordinateur (116).

17. Procédé selon la revendication 16, dans lequel le choix du second mode de fonctionnement a lieu à l'aide de la souris d'ordinateur (100).
